(19) Europäisches Patentamt
European Patent Office
Office européen des brevets

(11) **EP 4 718 877 A1**

(12) **EUROPEAN PATENT APPLICATION**

(43) Date of publication:
**01.04.2026 Bulletin 2026/14**

(21) Application number: **24306588.5**

(22) Date of filing: **27.09.2024**

(51) International Patent Classification (IPC):
**H04R 29/00** *(2006.01)* **H04S 7/00** *(2006.01)*

(52) Cooperative Patent Classification (CPC):
**H04S 7/301; G01S 13/765;** G01S 5/0247;
G01S 5/0289; G01S 5/12; H04R 2205/024;
H04S 7/303

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **GESLIN, Jeremy**
**14460 Caen (FR)**
• **JOGI, Sunil Dilipkumar**
**San Jose, CA95134 (US)**
• **OZENNE, Patrick**
**06560 Valbonne (FR)**
• **JUVIN, Jerome Jean-Marie**
**06560 Valbonne (FR)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire SO51 9NJ (GB)**

(54) **SYSTEM AND METHOD FOR SPEAKER LOCATION AND ORIENTATION**

(57) There is provided a system and method for detecting location and orientation of a plurality of devices in a surround sound system, the plurality of devices comprising a lead device and a plurality of follower devices. The method comprises a discovery stage in which the lead device discovers the plurality of follower devices. The method further comprises a primary mapping stage in which an ultra-wideband, UWB, connection is created between the lead device and a first group of the plurality of follower devices which are within a field of view, FoV, of the lead device. The method also comprises an orientation detection stage in which a location $(X_{Fa}, Y_{Fa})$ and an orientation $\Phi_L$ of each one of the follower devices of the first group is calculated.

200

```
Discovery Stage               210

Primary Mapping Stage         220

Orientation Detection         230

Secondary Mapping
Stage (optional)              240

Orientation Detection
(optional)                    250
```

<u>Figure 2</u>

EP 4 718 877 A1

**Description**

FIELD

The present disclosure relates to a system and method for speaker location and orientation of a surround sound system. In particular, wherein the surround sound system comprises a lead device, such as a sound bar or television set, and a plurality of follower devices, such as speakers.

BACKGROUND

Surround sound system requires accurate positioning of the speakers, soundbar or TV, for best audio experience. It is not always easy in real life to place the speakers at optimal position for best audio experience. There are methods available to detect the placement of speakers relative to a soundbar or TV. One example uses audio tones to detect the speaker location relative to the sound bar or TV. Other techniques rely on user input or audio-based detection. Various different methods using a variety of different technologies have been suggested for positioning and orienting the sound system.

There are some disadvantages of existing known method including accuracy and efficiency, accordingly there is a need for an improved method of accurate positioning of speakers in a surround sound system.

SUMMARY

According to a first aspect, there is provided a method for detecting location and orientation of a plurality of devices in a surround sound system, the plurality of devices comprising a lead device and a plurality of follower devices. The method comprises a discovery stage in which the lead device discovers the plurality of follower devices. The method further comprises a primary mapping stage in which an ultra-wideband, UWB, connection is created between the lead device and a first group of the plurality of follower devices which are within a field of view, FoV, of the lead device. The method also comprises an orientation detection stage in which a location $(X_{Fa}, Y_{Fa})$ and an orientation $\Phi_L$ of each one of the follower devices of the first group is calculated.

UWB employs a wide channel bandwidth typically defined with frequency of over 500 MHz and has a frequency range from 3.1 to 10.6 GHz.

According to a second aspect, there is provided a surround sound system comprising a lead device and one or more follower devices. The surround sound system is arranged to carry out the method according to the first aspect.

BRIEF DESCRIPTION OF DRAWINGS

A more complete understanding of the subject matter may be derived by referring to the detailed description and claims when considered in conjunction with the following figures, wherein like reference numbers refer to similar elements throughout the figures.

Figure 1A illustrates an example surround sound audio system comprising a lead device and a plurality of follower devices according to an embodiment of the disclosure;
Figure 1B illustrates a top-down view of a lead device L1, a follower device F2, a follower device F3, and a FoV of the lead device according to an embodiment of the disclosure;
Figure 1C is an illustrative example implementation of an audio system according to an embodiment of the disclosure;
Figures 2 illustrates a flow diagram of a method for determining location and orientation of follower devices relative to a lead device according to an embodiment of the disclosure;
Figure 3 illustrates information that is received at a lead device L from a follower device F in the primary mapping stage according to an embodiment of the disclosure;
Figure 4 illustrates data used in determining follower device F location $(X_{Fa}, Y_{Fa})$ according to an embodiment of the disclosure;
Figure 5 illustrates a misplaced follower device according to an embodiment of the disclosure;
Figure 6 illustrates a misoriented follower device according to an embodiment of the disclosure;
Figure 7 illustrates a sequence chart of stages during the secondary mapping stage according to an embodiment of the disclosure; and
Figure 8 illustrates data that is transferred between an initiator device $F_a$ and a responder device $F_b$ during the secondary mapping phase according to an embodiment of the disclosure.

DETAILED DESCRIPTION

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

The present disclosure provides a method to accurately detect the location and orientation of a plurality of speakers (follower devices) relative to a lead device (for example a TV or soundbar) using ultra-wideband UWB techniques. Once the location and orientation have been accurately detected, the audio can be tuned accordingly based on a sweet spot of the user. A listening sweet spot is detected based on a listener's position. Information is used by the lead device to render and tune the sound for best listening experience for the user based on the sweet spot. A further advantage of the present disclosure is that follower devices can be added or removed dynamically with background calibration of the devices and rendering of audio based on that.

The method is comprised of three main stages comprising a discovery stage, a primary mapping stage and an orientation detection stage, and two optional stages comprising a secondary mapping stage and a second orientation detection stage.

Advantages offered by the methods and system described herein include improved accuracy of measurement with UWB based ranging. Detection of follower devices (speakers) using UWB can be performed in some examples. An overall time required for detection of location and orientation of a follower device relative to the lead device can be reduced significantly compared to known techniques.

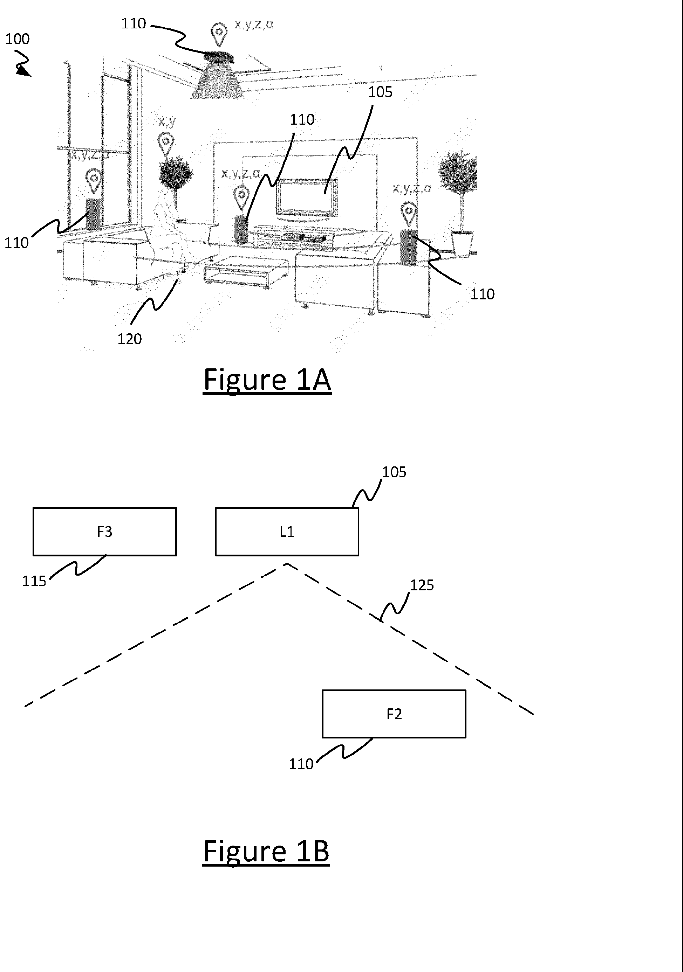

Figure 1A illustrates an example surround sound audio system 100 comprising a lead device 105 and a plurality of follower devices 110. A user 120 is situated amongst the surround sound audio system.

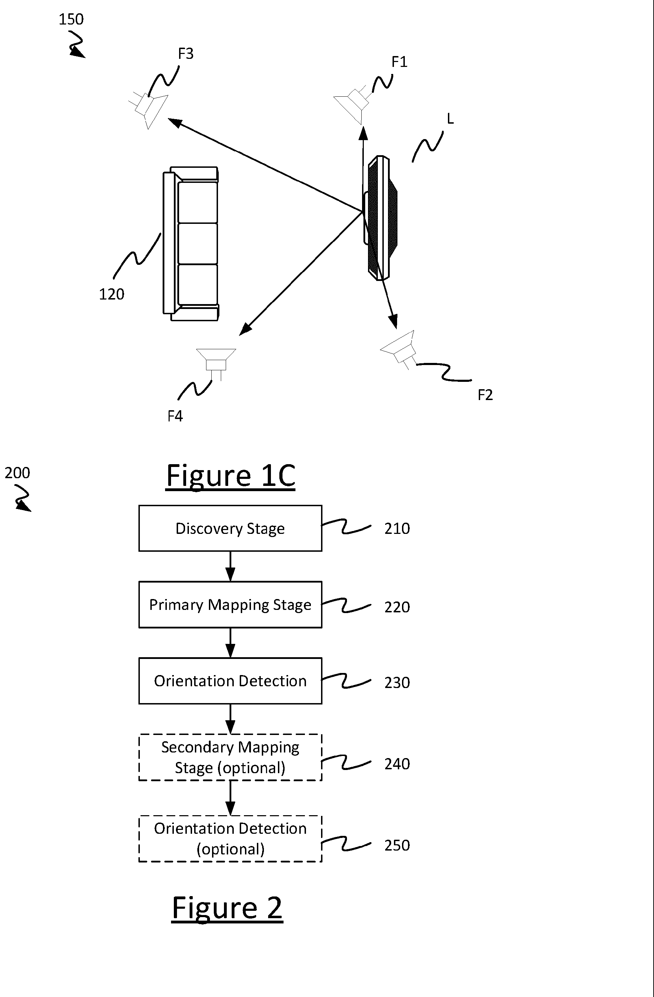

The lead device 105 illustrated in Figure 1 is a television set. In alternative embodiments, the lead device is a sound bar. The lead device 105 is located at location $(X_L, Y_L)$ relative to a sweet spot location (0, 0) with an orientation $\Phi_F$ relative to the sweet spot.

Follower devices 110 comprising wired or wireless speakers are positioned around the room at locations $(X_F, Y_F)$ with orientations $\Phi_L$ relative to the sweet spot. For the purposes of the present disclosure, a height of a follower device (in a z direction) relative to a lead device or a sweet spot is considered to be limited in variation and falls outside of the scope of the present disclosure.

Ultra-wideband (UWB) ranging techniques are used to compute distance and angular measurements such as Angle of Arrival (AoA) of the lead and follower devices 105, 110. UWB is a wireless technology that uses wideband radio waves which operate in higher frequency bands and use a higher bandwidth than other short-range technologies such as Wi-Fi or Bluetooth©. It employs a wide channel bandwidth typically defined with frequency of over 500 MHz and has a frequency range from 3.1 to 10.6 GHz. It supports a bit rate greater than 100 Mbps within a 10-meter radius for wireless personal area communications. It uses a pulse pattern-based radio technology that sends out short pulses with widths of a few nanoseconds. Because of the wide spectrum available to the technology, pulsed data can be sent very quickly. The wide bandwidth also allows it to have a low power spectral density which minimizes interference with other technologies operating in the same frequency band. Another important aspect of UWB is its capacity to employ low carrier frequencies, where signals may more effectively penetrate obstacles; it is also free of interference because its spectrum is quite distinct. As a result of all of these characteristics, UWB technology is a suitable option for indoor positioning. A UWB chip located at each of the lead and follower devices 105, 110 supports Figure of Merit (FoM) for AoA measurements.

UWB has limited field of view (FoV) so in some embodiments, not all of the follower devices 110 will be within the FoV of the lead device 105. Relative measurements of distance and AoA to one or more of the follower devices 110 within the FoV are used to compute location and orientation of these follower devices 110.

Figure 1B illustrates a top-down view of a lead device (L1) 105, a follower device (F2) 110, a follower device (F3) 115, and a FoV 125 of the lead device 105. F2 is within the FoV of L1 and F3 is outside the FoV of L1.

AoA measurement by L1 for F2 is useable as it is within the FoV 125 of L1. A FoM for this AoA measurement is normally ≥ 95% accurate (accurate number depends on calibration and antenna design).

F3 is outside of FoV of L1 and so an AoA measurement by L1 for F3 is not useable because FoM for this AoA measurement is normally < 5% accurate (accurate number depends on calibration and antenna design).

The present disclosure provides a method for determining location and orientation of a plurality of follower devices 110 which are within a FoV of the lead device 105 and optionally one or more follower devices 115 which are not in the FoV of the lead device 105 if any of the follower devices fall into this category.

Follower devices 110 that are within the FoV of a lead device are referred to as "known devices" in the following detailed description. Known devices form a first group of follower devices. A minimum number of devices in the first group is one. In some embodiments, all the follower devices of the surround sound system are in the first group.

Follower devices 115 that are not in the FoV of a lead device are referred to as "misplaced", "misoriented" or "misaligned" devices in the following detailed description and form a second group of follower devices, different to the first group of follower devices, which are outside a FoV of the lead device. In some embodiments, no devices in the surround sound system fall into the second group.

Figure 1C is an illustrative example implementation of an audio system 150 that will be used to explain the present disclosure in more detail below. The audio system 150 comprises a lead device L, follower devices F1, F2, F3, F4 and sweet spot 120, for example located at a position on a sofa where a user sits to watch the television which in this case is the lead device L. Follower devices F1 and F2 are outside the FoV of the lead device L and follower devices F3 and F4 are within the FoV of the lead device L. F3 and F4 comprise a first group of follower devices, whilst F1 and F2 comprise a second group of follower devices.

Figure 2 illustrates a flow diagram of a method for determining location and orientation of follower devices relative to a lead device. The method of locating and orienting a location of speakers comprising the lead device and a plurality of follower devices in a surround sound system using UWB comprises a discovery stage 210, a primary mapping stage 220, and orientation detection 230. If there are one or more follower devices which are not in a FoV of a lead device (e.g. F1, F2 in Figure 1C), the method further comprises a secondary mapping stage 240, and a second orientation detection 250. The steps 240, 250 are performed for follower devices which fall outside the FoV of the lead device, if all the follower devices are within a FoV of the lead device, steps 240 and 250 are not required.

The method 200 of the present disclosure uses different ranging methods and AoA methods for UWB. It does not describe the details of known aspects of the invention including ranging, AoA calculation method, UWB MAC layer, scheduling aspects of the MAC layer, sweet spot location, or lead device location and orientation relative to the sweet spot.

UWB ranging methods which can be used in the present disclosure, but which are not limited, include: Double sided Two Way Ranging (DS-TWR), Single sided Two Way Ranging (SS-TWR), and Contention Based Ranging (CBR).

In a first embodiment, all the follower devices 110 are within the FoV of the lead device 105. For example, consider Figure 1C comprising only follower devices F3 and F4.

The first step comprises a discovery stage 210. The discovery stage comprises the lead device L discovering all follower devices (both those within a FoV and those outside of a FoV of the lead device). During the discovery stage 210 a UWB MAC address of each of the follower devices is collected by the lead device. It is assumed that each follower device and the lead device have a unique UWB MAC address.

There are several ways for the lead device to discover the follower devices. These include two methods using a UWB discovery procedure and one using an out of band (OOB) discovery procedure.

The first UWB discovery procedure comprises initiating a UWB ranging session, such as a Contention-Based-Ranging (CBR) session, with all of the follower devices in the surround sound system and collects a UWB MAC address from each of the follower devices during the session. The CBR session can address more than ten follower devices in a session.

A second UWB discovery procedure comprises UWB session parameters being exchanged between the lead device and each of the plurality of follower devices. If the lead and follower devices each support Bluetooth Low Energy (BLE), WiFi or other OOB mechanisms, that OOB mechanism can be used. Alternatively, if no OOB methods are available, or not used, a parameter can be hardcoded at the time of manufacturing the devices.

An alternative discovery procedure comprises an OOB discovery procedure via a data channel. A BLE, WiFi or other OOB data channel is used to embed information concerning UWB MAC addresses of the devices. The lead device decodes the data channel to detect information about available follower devices.

A second step 220 comprises a primary mapping stage. A UWB connection is created between lead device and a first group of the plurality of follower devices which are within a FoV of the lead device. The UWB connection between the lead device and each one of the plurality of follower devices of the first group allows information to be shared, for example concerning the follower device. In some embodiments, the UWB connection comprises a UWB ranging session. The UWB connection also serves as a data link to exchange commands, responses, notifications, etc. between the lead and follower devices.

The lead device initiates a UWB ranging session, such as a multicast Double-Sided Two-Way-Ranging (DS-TWR) session or other TWR session, with follower devices of the first group. In some embodiments, a maximum number of follower devices in a single DS-TWR session comprises eight. Further follower devices over and above eight require a second DS-TWR session to be undertaken. DS-TWR parameters can be shared through an OOB method.

During the UWB ranging session data is collected concerning the follower devices such as distances (d) and angle-of-arrival (AoA) of follower devices relative to the lead device. The data is retrieved by the lead device. Using the collected distances and AoAs, the lead device computes a location ($X_{Fa}$, $Y_{Fa}$) and an orientation $\Phi_L$ of each of the follower devices in the first group by mapping their locations relative to itself and a sweet spot.

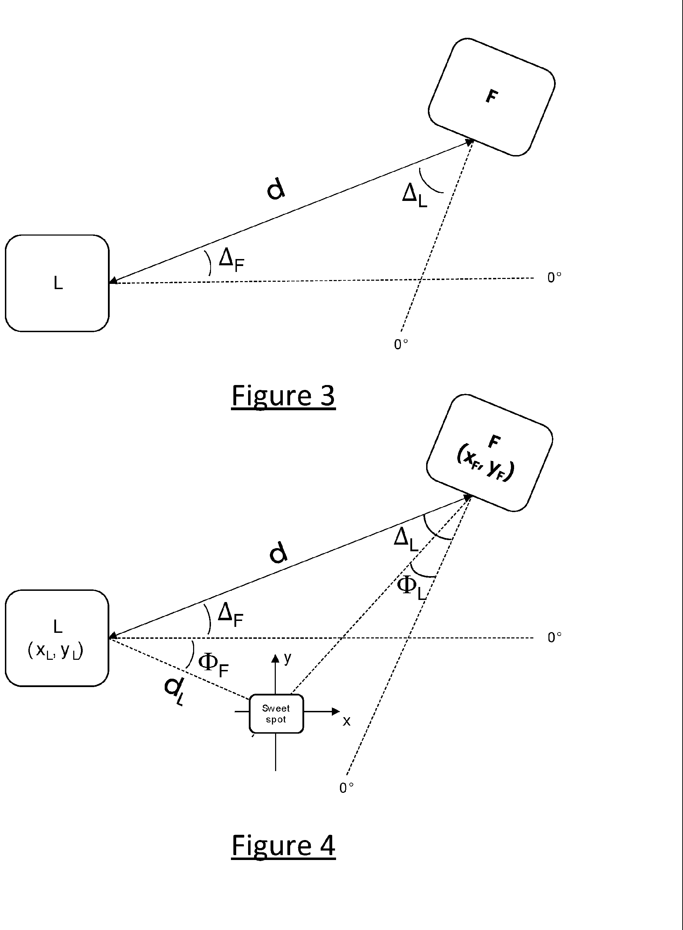

Figure 3 illustrates information that is received at a lead device L from a follower device F in the primary mapping stage 220, where F is a follower device in the first group of follower devices. Data recovered in the primary mapping stage 220 is used to receive information to be able to map each of the follower devices in the first group relative to the lead device in the x, y plane. All the distances and angles are measured for each follower device F in the first group of follower devices in the x, y plane.

Data received during the primary mapping stage 220 includes:

(a) a distance, d, between the lead device and a follower device,
(b) an AoA of the follower device as seen from the lead device, $\Delta F$, and
(c) an AoA of the lead device as seen from the follower device, $\Delta L$ (AoA destination).

As illustrated in Figure 3, the AoA of the follower device as seen from the lead device, $\Delta F$, is measured from an angle of 0 degrees of the lead device L towards the follower device F, where 0 degrees is defined in a direction "face-on" to the lead device. The AoA of the lead device as seen from the follower device, $\Delta L$, is measured from an angle of 0 degrees of the follower device F towards the lead device L, where 0 degrees is defined in a direction "face-on" to the follower device.

Data that is received at the lead device L from each one of the follower devices F in the first group during the primary mapping stage 220 is used in the next step of the method of orientation detection 230 for computing the location $(X_{Fa}, Y_{Fa})$ of each of the follower devices in the first group of follower devices and orientation $\Phi_L$ of each of the follower devices in the first group of follower devices, wherein the angle of orientation $\Phi_L$ is measured relative to a sweet spot.

Data collected during the primary mapping stage 220 between a lead device L and a plurality of follower devices F1, F2, F3, ... , Fn comprises the following:

|   | F1 | F2 | F3 | ... | Fn |
|---|---|---|---|---|---|
| L | $d_{L1}, \Delta_{F1}, \Delta_{L1}$ | $d_{L2}, \Delta_{F2}, \Delta_{L2}$ | $d_{L3}, \Delta_{F3}, \Delta_{L3}$ |   | $d_{Ln}. \Delta_{Fn}, \Delta_{Ln}$ |

Figure 4 illustrates data used in determining follower device F location $(X_{Fa}, Y_{Fa})$. Note that in Figure 4 notation of $(X_{Fa}, Y_{Fa})$ is illustrated as $(X_F, Y_F)$. This notation is interchangeable in the present disclosure, where the subscript "Fa" indicates a coordinate of a follower device in the first group of follower devices. Location is determined using data comprising d and $\Delta F$ retrieved by the lead device L in the primary mapping stage 220 and comprises a relative position of the follower device F to the lead device L.

A sweet spot location is defined as an origin having location (0, 0). Determining a location of the sweet spot is calculated using known methods not described herein. Lead location $(X_L, Y_L)$ and orientation towards the sweet spot $\Phi_F$ is also known and is not covered in detail herein. Some examples of determining a sweet spot include: using a device user interface to manually position the sweet spot in the room, or using a phone (or a wearable device) handled by the user positioning themself at the sweet spot location and lead device being capable to retrieve phone location (by means of acoustic methods or via UWB ranging for instance).

Lead device location $(X_L, Y_L)$ is used to calculate follower device location $(X_F, Y_F)$ and can be determined using the equations $X_F = X_L + (d\,cos\Delta_F)$ and $Y_F = Y_L + (d\,sin\Delta_F)$.

Follower device orientation $\Phi_L$ towards the sweet spot is measured as an angle of displacement from 0 degrees of the follower device towards the sweet spot as illustrated in Figure 4 and is calculated by combining follower device location $(X_F, Y_F)$ with $\Delta L$. Lead device orientation $\Phi_F$ to the sweet spot is known and can be used to work out follower device orientation $\Phi_L$ using the equation: $\Phi_L = Arctan\left(\frac{|X_L|}{|Y_L|}\right) - \left(90 - \left(\Delta_F - \Phi_F + Arccos\left(\frac{|X_L|}{d_L}\right)\right) - \Delta_L\right)$. Lead device orientation $\Phi_F$ is measured from 0 degrees of the lead device L in a direction towards the sweet spot.

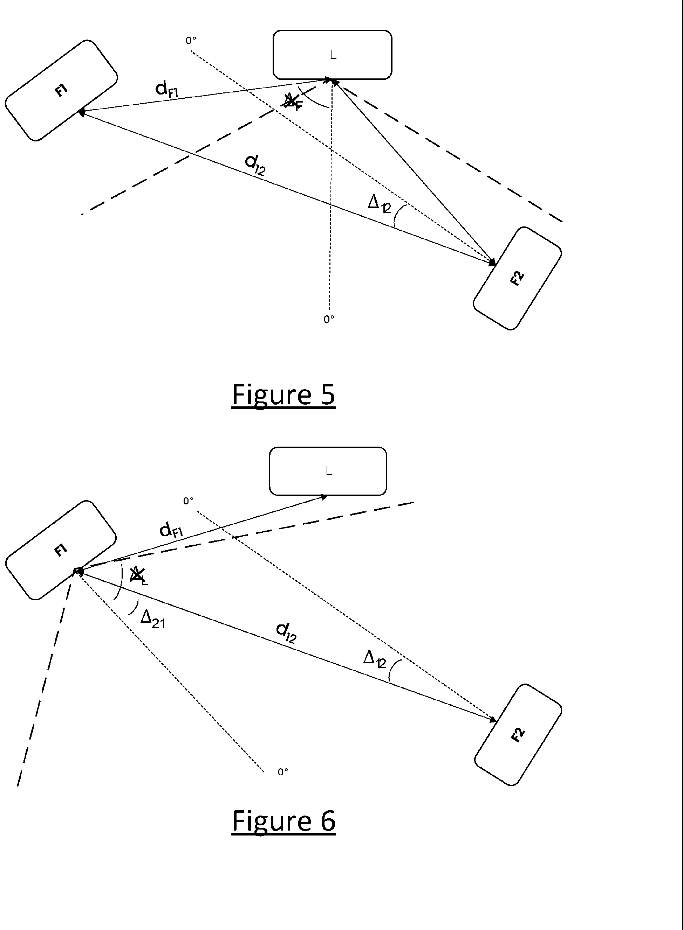

A third optional step comprises a secondary mapping stage 230 and can be used in a second embodiment of the present disclosure when full mapping of the follower devices is not achieved during the primary mapping stage 220 according to the second step described above. The third step may be needed in two different scenarios which are illustrated in Figures 5 and 6. The first scenario is when a "misplaced follower" occurs and the second scenario is when a follower device is a "misoriented follower".

Figure 5 illustrates a misplaced follower device. This happens if the AoA of the follower device F1 seen from the lead device L (angle $\Delta F$) is not obtained or is obtained with a bad Figure of Merit (FoM) in the primary mapping stage 220. This happens for example when the follower device F1 is outside the lead device FoV.

Figure 6 illustrates a misoriented follower device. This happens when the AoA of the lead device L seen from the follower device F1 (angle $\Delta L$) is not obtained or is obtained with a bad FoM during the primary mapping stage 220, for example where the lead device L is outside the follower device FoV, also called non-Line-of-Sight, nLOS.

A misoriented follower can inform its own misorientation to the lead device L through a data channel, for example inbound through a UWB or OOB channel established between the lead device L and the misoriented follower device.

When one or more misplaced or misoriented follower device occur, the third step is used to localise them. All the follower devices that are not misplaced or misoriented followers are called "known followers".

A secondary mapping stage 240 is used in the third step where one or more misplaced or misoriented follower devices are present in the surround sound system. Any follower devices which are not in the first group of known follower devices form part of a second group of follower devices. The secondary mapping stage 240 allows the lead device to identify misplaced and misaligned follower devices of the second group of follower devices.

The lead device instructs each misplaced and misoriented follower to start a UWB session, for example a DS-TWR session or other type of UWB session, between themselves and each of the known follower devices of the first group through a data channel. The misaligned and misoriented followers act as initiator devices, whilst the known followers act as responder devices.

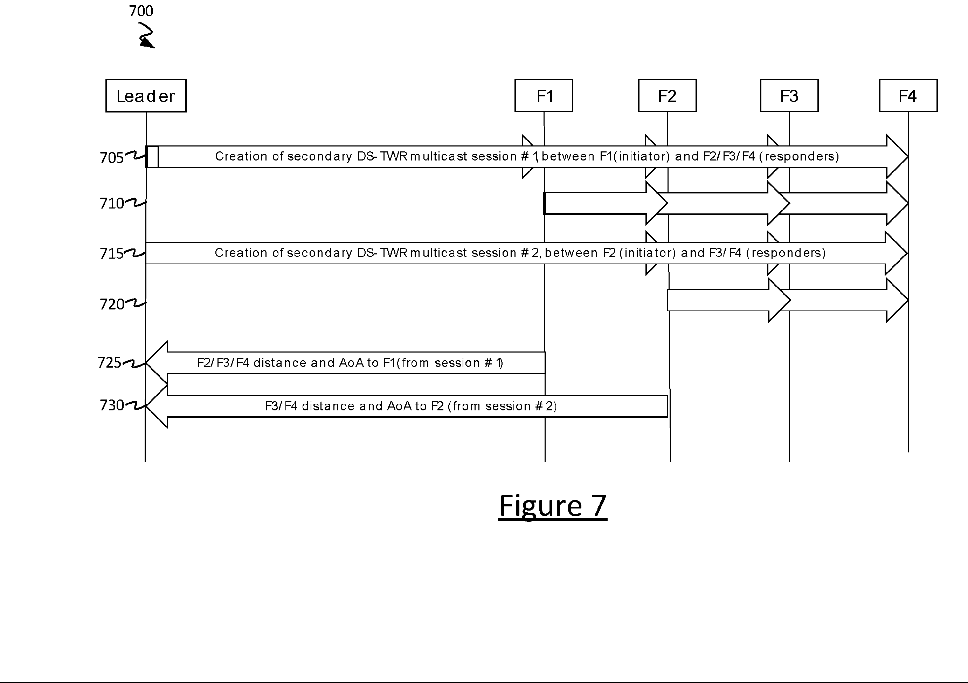

Figure 7 illustrates a sequence chart of stages during the secondary mapping stage 240. The example illustrated is based on the scenario illustrated in Figure 1C which comprises two misplaced followers F1, F2 and two known followers F3, F4.

In a first stage 705 of the sequence chart of Figure 7, the lead device creates a first secondary DS-TWR multicast session between a first initiator device F1 and responder devices F2, F3, F4. Note that the other misplaced follower device F2 is included as a responder device when the first initiator device is F1.

In a second stage 710, a first secondary DS-TWR session is established by the first initiator device F1. This is established between the first initiator device F1 and the responder devices F2, F3, F4. Data is transferred to the initiator device from each of the responder devices.

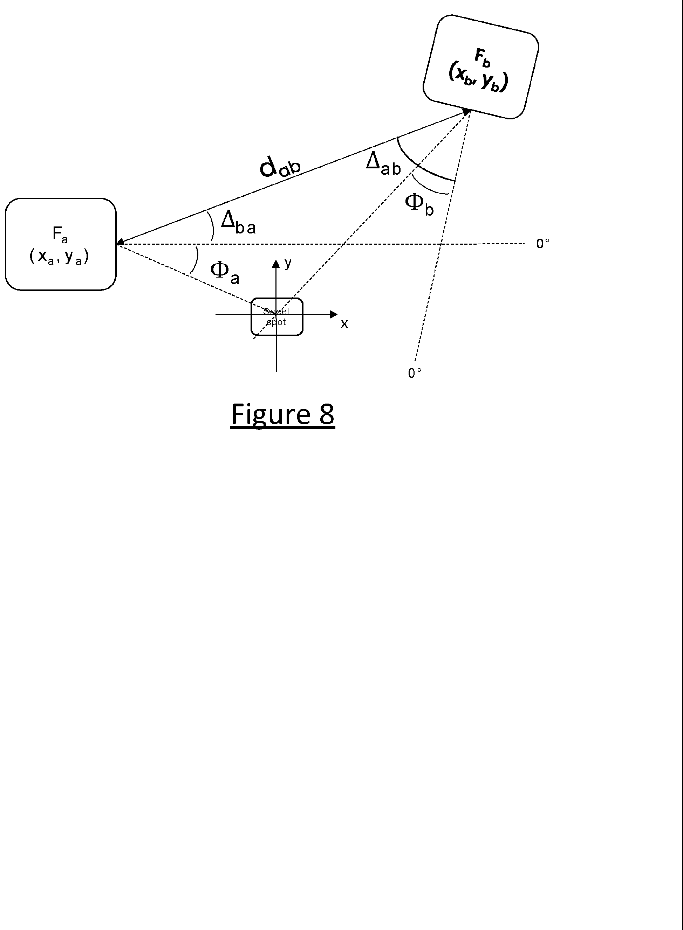

Figure 8 illustrates data that is transferred between an initiator device $F_b$ and a responder device $F_a$ (which is a known follower device) during the secondary mapping phase 240 as illustrated in Figure 7. The data that is collected includes:

(a) a distance, $d_{ab}$, between the responder device $F_a$ and the initiator device $F_b$,
(b) an AoA of the responder device as seen from the initiator device, $\Delta_{ba}$, and
(c) an AoA of the initiator device as seen from the responder device, $\Delta_{ab}$ (AoA destination).

In a third stage 715, the lead device creates a second secondary DS-TWR multicast session between a second initiator device F2 and responder devices F3, F4.

In a fourth stage 720, a second secondary DS-TWR session is established by the second initiator device F2. This is established between the second initiator device F2 and the responder devices F3 and F4. Note that the first initiator device F1 is not included in the stages 715 or 720. Data as illustrated in Figure 8 and as described above in relation to stage 710 is transferred to the second initiator device F2 from each of the responder devices F3, F4.

In a fifth stage 725, the distances and AoA between the first initiator device F1 and responder devices F2, F3, F4 as collected by F1 at stage 710 is sent to the lead device.

In a sixth stage 730, the distances and AoA between the second initiator device F2 and responder devices F3, F4 as collected at stage 720 is sent to the initiator device.

Alternative implementations where there are less than two or more than two misaligned or misplaced follower devices in the surround sound system are also possible. In the case of a single follower device being a misplaced or misoriented device, stages 715 and 720 and 730 of Figure 7 would not be required. Conversely, if additional follower devices were present, additional stages of creation of a session between the misplaced or misoriented device as initiator and the responders and data transfer to the lead device would be required.

Data collected during the secondary mapping stage 240 of the method comprising a plurality of follower devices Fn comprises:

|  | F1 | F2 | F3 | ... | Fn |
|---|---|---|---|---|---|
| F1 | - | $d_{12}, \Delta_{12}$ | $d_{13}, \Delta_{13}$ |  | $d_{1n}. \Delta_{1n}$ |
| F2 | $d_{21}, \Delta_{21}$ | - | $d_{23}, \Delta_{23}$ |  | $d_{2n}, \Delta_{2n}$ |
| F3 | $d_{31}, \Delta_{31}$ | $d_{32}, \Delta_{32}$ | - |  | $d_{3n}, \Delta_{3n}$ |
| ... |  |  |  | - |  |
| Fn | $d_{n1}, \Delta_{n1}$ | $d_{n2}, \Delta_{n2}$ | $d_{n3}, \Delta_{n3}$ |  | - |

The fifth step comprises orientation detection 250 of the misplaced and misoriented follower devices. Based on known follower device $F_a$ having location $(X_{Fa}, Y_a)$ and orientation $\Phi_a$ computed during previous step (orientation $\Phi_a$ interchangeable with $\Phi_L$ above) during the first orientation detection stage 230, estimation of follower device $F_b$ having location $(X_{Fb}, Y_{Fb})$ (illustrated as $(X_b, Y_b)$ in Figure 8) can be calculated using the equations $X_{Fb} = X_{Fa} + (d_{ab} \sin\Delta_{ba})$ and $Y_{Fb}$

= $Y_{Fa}$ + ($d_{ab}sin\Delta_{ba}$).

Orientation of follower device $\Phi_b$ to the sweet spot is estimated based on the equation:

$$\Phi_b = Arctan\left(\frac{|X_{Fa}|}{|Y_{Fa}|}\right) - 90 + \Delta_{ba} - \Phi_a + Arccos\left(\frac{|X_{Fa}|}{\sqrt{X_{Fa}^2 + Y_{Fa}^2}}\right) + \Delta_{ab}$$

Accordingly, each of the plurality of follower devices in the surround sound system have a determined location ($X_F$, $Y_F$) and orientation $\Phi$ calculated using the above described methods in scenarios where follower devices are within a FoV of a lead device, and where follower devices are outside a FoV of a lead device.

The present disclosure solves accurate distance measurement between leader device and follower devices along with orientation of the follower device. Orientation of the follower device can be detected irrespective of the FoV of the lead or follower device. A complete method is provided to gather the data which can be used by lead device to render and optimize the sound based on available position with various number of follower devices.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

## Claims

1. A method for detecting location and orientation of a plurality of devices in a surround sound system, the plurality of devices comprising a lead device and a plurality of follower devices, the method comprising:

   a discovery stage in which the lead device discovers the plurality of follower devices;
   a primary mapping stage in which an ultra-wideband, UWB, connection is created between the lead device and a first group of the plurality of follower devices which are within a field of view, FoV, of the lead device; and
   an orientation detection stage in which a location ($X_{Fa}$, $Y_{Fa}$) and an orientation $\Phi_L$ of each one of the follower devices of the first group is calculated.

2. The method of claim 1, wherein the primary mapping stage further comprises:
   the lead device retrieving from each one of the follower devices of the first group:

   a distance, d, between the lead device and a follower device;
   an angle-of-arrival, AoA, of the follower device as seen from the lead device, $\Delta$F.

3. The method of claim 2, further comprising:
   using a lead device location ($X_L$, $Y_L$), d, and $\Delta$F to calculate the follower device location ($X_{Fa}$, $Y_{Fa}$) using the equations $X_{Fa} = X_L + (d\,cos\Delta_F)$ and $Y_{Fa} = Y_L + (d\,sin\Delta_F)$ for each one of the follower devices of the first group.

4.  The method of claim 3, wherein the primary mapping stage further comprises for each one of the follower devices of the first group:
    the lead device retrieving an AoA of the lead device as seen from a follower device, ΔL; and
    determining the orientation of the follower device $\Phi_L$ based on a lead device orientation $\Phi_F$, ΔL and the follower device location $(X_{Fa}, Y_{Fa})$.

5.  The method of claim 4, wherein the follower device orientation $\Phi_L$ is calculated using the following equation

$$\Phi_L = Arctan\left(\frac{|X_L|}{|Y_L|}\right) - \left(90 - \left(\Delta_F - \Phi_F + Arccos\left(\frac{|X_L|}{d_L}\right)\right) - \Delta_L\right).$$

6.  The method of any preceding claim, wherein the discovery stage comprises collecting a UWB media access control, MAC, address of each of the plurality of follower devices.

7.  The method of any preceding claim, wherein the discovery stage comprises a UWB discovery procedure.

8.  The method of any of claims 1 to 6, wherein the discovery stage comprises an out-of-band discovery procedure via a data channel.

9.  The method of any preceding claim, further comprising:

    a secondary mapping stage for a second group of the follower devices which are outside the FoV of the lead device; and
    a second orientation detection stage for determining a location $(X_{Fb}, Y_{Fb})$ and an orientation $\Phi_b$ of each one of the follower devices of the second group.

10. The method of claim 9, further comprising the lead device instructing one of the second group of devices to become a first initiator device and the remaining plurality of follower devices of the first and second groups to be responder devices.

11. The method of claim 10, further comprising determining a location of the first initiator device $(X_{Fb}, Y_{Fb})$ based on the location of a follower device of the first group of follower devices $(X_{Fa}, Y_{Fa})$.

12. The method of claim 11, further comprising receiving at the lead device a distance, $d_{ab}$, and an AoA, $\Delta_{ba}$, between the first initiator device and each one of the responder devices.

13. The method of claim 12, wherein the location of the first initiator device $(X_{Fb}, Y_{Fb})$ is calculated using the equations $X_{Fb} = X_{Fa} + (d_{ab}\, sin\Delta_{ba})$ and $Y_{Fb} = Y_{Fa} + (d_{ab}sin\Delta_{ba})$.

14. The method of claim 13, further comprising determining the orientation $\Phi_b$ of the initiator device based on the orientation of the follower device $\Phi_L$ of the first group, using the equation:

$$\Phi_b = Arctan\left(\frac{|X_{Fa}|}{|Y_{Fa}|}\right) - 90 + \Delta_{ba} - \Phi_L + Arccos\left(\frac{|X_{Fa}|}{\sqrt{X_{Fa}^2 + Y_{Fa}^2}}\right) + \Delta_{ab}$$

15. A surround sound system comprising:

    a lead device; and
    one or more follower devices;
    wherein the surround sound system is arranged to carry out the method of any of claims 1 to 14.

Figure 1A

Figure 1B

150

F3

F1

L

120

F4

F2

## Figure 1C

200

| Discovery Stage | 210 |

| Primary Mapping Stage | 220 |

| Orientation Detection | 230 |

| Secondary Mapping Stage (optional) | 240 |

| Orientation Detection (optional) | 250 |

## Figure 2

Figure 3

Figure 4

## Figure 5

## Figure 6

Figure 7

Figure 8

Europäisches
Patentamt
European
Patent Office
Office européen
des brevets

# EUROPEAN SEARCH REPORT

**Application Number**

EP 24 30 6588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/264506 A1 (BALABANIS NIKO [FI] ET AL) 17 September 2015 (2015-09-17) | 1-8,15 | INV.<br>H04R29/00<br>H04S7/00 |
| A | * the whole document *<br>----- | 9-14 | |

**TECHNICAL FIELDS SEARCHED (IPC)**

H04R
H04S

The present search report has been drawn up for all claims

| Place of search | Date of completion of the search | Examiner |
|---|---|---|
| The Hague | 27 February 2025 | De Meuleneire, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 6588

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | | Publication date |
|---|---|---|---|---|
| US 2015264506 A1 | 17-09-2015 | CN | 104823070 A | 05-08-2015 |
| | | EP | 2904416 A1 | 12-08-2015 |
| | | US | 2015264506 A1 | 17-09-2015 |
| | | WO | 2014053877 A1 | 10-04-2014 |

EPO FORM P0459

For more details about this annex : see Official Journal of the European Patent Office, No. 12/82